# EUROPEAN PATENT SPECIFICATION

(11) **EP 1 604 373 B1**
(45) Date of publication and mention of the grant of the patent: **25.07.2012**
(21) Application number: 02792357.2
(22) Date of filing: 12.12.2002
(51) Int. Cl.: C21B 13/00, C21B 13/02

(54) **METHOD AND APPARATUS FOR CONTROLING TEMPERATURE UNIFORMITY OF THE BURDEN IN A DIRECT REDUCTION SHAFT FURNACE**
VERFAHREN UND VORRICHTUNG ZUR STEUERUNG DER TEMPERATURGLEICHMÄSSIGKEIT DER LAST IN EINEM SCHACHTOFEN MIT DIREKTREDUKTION
PROCEDE ET APPAREIL DE CONTROLE D'UNIFORMITE DE TEMPERATURE DU LIT DE FUSION DANS UN FOUR A CUVE A REDUCTION DIRECTE

(43) Date of publication of application: 14.12.2005
(73) Proprietor: Midrex International B.V. Rotterdam, Zürich Branch, 8001 Zurich (CH)
(72) Inventor: METIUS, Gary, E., Charlotte, NC 28270 (US); MONTAGUE, Stephen, C., Midland, NC 28107 (US); BAILEY, Russell, Charlotte, North Carolina 28217 (US); KAKALEY, Russell, Charlotte, NC 28269 (US); VOELKER, Brian, W., Concord, NC 28027 (US)
(74) Representative: Sonn & Partner Patentanwälte
(86) International application number: PCT/US2002/039631
(87) International publication number: WO 2004/055832

(56) References cited:
- WO-A-00/36158
- US-A- 3 748 120
- US-A- 4 054 444
- US-A- 4 248 623
- US-A- 4 351 513
- US-A- 5 618 032
- US-A- 6 146 442
- US-B1- 6 214 086

## Description

The present invention relates to a method and apparatus for controlling the temperature during the direct reduction of iron. Apparatus for the reduction of iron oxid are known from US 4,054,444, WO 00/36158 A1, US 4,351,513 and US 4,248,623 respectively.

The production of direct reduced iron in both hot and cold discharge plants occurs in a vertical shaft furnace and involves reduction of iron ore or iron oxide as it moves downwardly in a reduction zone of a vertical shaft furnace through which is passed a suitable hot reducing gas, known as bustle gas. Bustle gas, which is principally composed of carbon monoxide and hydrogen, is introduced to the shaft furnace at temperatures in the range of about 700°C to about 1100°C. The ore is charged at the top of the furnace and caused to flow downwardly through the reduction zone wherein it is reduced by heated reducing gas which flows upwardly through the furnace, after which the reduced ore flows into and downwardly through the transition zone to be carburized if desired. For cool discharge plants, after passing through the reduction zone, the ore is cooled in a cooling zone through which is passed a gaseous coolant at a temperature below about 200°C. Typically, in a cool discharge furnace, both the reducing gas and cooling gas are re-circulated, optionally in closed loops, to which streams of fresh (i.e. "make-up") reducing gas are added and from which streams of spent gas are removed.

The reducing gas being fed to the reduction zone of the furnace is typically at an elevated temperature, which is required by reaction kinetics. The reducing gas is caused to contact the downwardly moving iron ore to reduce the iron oxides therein according to the following basic reactions:
(1) 3Fe₂O₃ + H₂/CO => 2Fe₃O₄ + H₂O/CO₂
(2) Fe₃O₄ + H₂/CO => 3FeO + H₂O/CO₂
(3) FeO + H₂/CO => Fe + H₂O/CO₂

In the production of direct reduced iron (DRI), it is desirable to increase the product carburization and to increase *in-situ* reforming in the lower portion of both hot and cold direct reduction furnaces by injecting hydrocarbons. This is a proven means to increase the productivity of direct reduction furnaces without adding new equipment to increase reducing gas capacity. This is also a proven means to increase product carbon. The hydrocarbons react with the hot DRI, depositing carbon and liberating hydrogen gas. However, the reaction of the hydrocarbons to form carbon and hydrogen is endothermic. Thus, the newly formed cool hydrogen gas flows upward through the center of the furnace (called upflow), cooling the descending iron material. Because of temperature considerations, the amount of hydrocarbons that can be added to the lower portion of the furnace is limited by either low center bed temperature or low product discharge temperature.

As more hydrocarbons are added to the lower portion of the furnace, cooled hydrogen gas is produced which rises into the reduction zone and the center bed temperature decreases, thus reducing reaction kinetics. The desired temperature of the burden is above 650°C. When the temperature of the burden is reduced to the range of 625-650°C, the average product metallization begins to drop because the material in the center of the furnace is not properly reduced/metallized. Also, in hot discharge furnaces, product discharge temperature must be maintained above about 700°C for proper subsequent briquetting. For hot transport applications, higher discharge temperature of the DRI makes more sensible heat available in the melter, thus reducing the power required for melting. As hydrocarbons are added to the lower portion of a hot discharge furnace, it is possible that the average product temperature will be below 700°C before the center bed temperature reaches the point that metallization drops significantly.

To date, several techniques have been used to allow higher flows of hydrocarbons to the furnace lower cone, to extend the limits noted above, and to control the temperature of the burden. For cold discharge furnaces, some examples of techniques being used are cooling zone bleed and simplified center injection. However, prior art center injection techniques lack means to control or measure hydrocarbon or reducing gas flow into the center injection system and lack means to force flow into the center injection line.

Another technique for temperature and carbon control which has been employed is the injecting of cold natural gas into the direct reduction furnace. The natural gas mixes with other gases already present in the furnace and is heated by the gas and solids already present in the furnace. As the hydrocarbons in the natural gas are heated, they crack to form H₂ and deposit carbon on the product or they are reformed by reaction with H₂O and CO₂ in the gas furnace to make additional H₂ and CO. The present limitation on the injection of natural gas is temperature. As more cold natural gas is injected, the center bed temperature decreases, which decreases the rate of reaction kinetics. At low flow rates of the cold natural gas, the production benefit from additional reducing gases will outweigh the disadvantage from decreased reaction kinetics. But when the temperatures in the center bed decrease to a certain point, any further production benefit from additional reducing gases will be negated by the decrease in reaction kinetics. This limits the amount of natural gas that can be added to the furnace for *in situ* cracking and reforming.

What is therefore needed is a means and method for increasing the amount of hydrocarbon gas supplied to the transition zone and/or cooling section of a direct reduction furnace while maintaining the temperature of the central reaction zone of the direct reduction furnace at a temperature favorable to the direct reduction of iron.

This object is achieved with an apparatus according to claim 1 and a method according to claim 8.

The present invention provides a method and apparatus which controls the temperature uniformity of the center portion of the iron burden in a direct reduction shaft furnace thereby allowing a higher amount of hydrocarbons to be used in the cooling zone. The invention is an efficient improvement of existing methods, particularly, the Midrex method and apparatus for direct reduction of iron which is incorporated by reference herein. Typically, the center portion of iron bearing material in the burden of a direct reduction furnace is cooler than the rest of the burden due to upflowing gases which is injected into the lower cooling section of the furnace and rises upwardly into the center portion of the reducing section of the furnace. By increasing the temperature of the burden in the center portion of the furnace, the iron is reduced under much more favorable conditions. Thus, the present invention is advantageous to achieve the objects stated herein.

Disclosed herein are methods for heating the center region of the furnace, particularly the burden. In a first embodiment of the invention, a hydrocarbon gas used in direct reduction may be preheated, which increases the temperature of the upflowing gas as it flows upwardly into the center of the burden. Alternatively, hot reducing gas may be directly injected into the center portion of the burden, offsetting the effect of the upflowing gases. The center injected hot reducing gas may be split off from the main reducing gas stream or may be generated by a partial oxidation reactor. Finally, it will be appreciated by those skilled in the art that the above noted embodiment may be employed individually or in combination depending on the DRI plant facility.

The principal object of the present invention is to provide a method and apparatus for controlling temperature uniformity in the burden of a direct reduction shaft furnace.

It is another object of the present invention to provide an apparatus and method which allows the use of higher quantities of hydrocarbons or other gases within the lower portion of both hot and cold discharge furnaces so that product carbon and/or in-situ reforming may be increased while the temperature within the center of the direct reduction furnace is maintained at a temperature favorable to the direct reduction of iron, thereby increasing the degree of carburization of the iron product without adversely affecting the metallization of the iron burden.

Another object of the present invention is to provide an apparatus and method for conserving energy in a direct reduction furnace by maintaining a uniform temperature throughout the burden.

Another object of the invention is to provide a method and apparatus for increasing the temperature of the center burden of a direct reduction furnace in order to offset the cooling effect caused by upflowing gases into the reduction zone of the furnace, and thereby increasing metallization of the burden.

Another object of the present invention is to provide control options to DR plant operators to allow significantly higher levels of hydrocarbon gas additions, while reducing the temperature variations across the burden.

The foregoing and other objects will become more readily apparent by referring to the following detailed description and the appended drawings in which:
Figure 1 is a schematic diagram showing an example of a typical direct reduction shaft furnace system for cool discharge product according to the Midrex process.
Figure 2 is a diagram showing center injection of reducing gas split from the main reducing gas stream.
Figure 3 is a diagram showing center injection of reducing gas produced by a partial oxidation reactor.
Figure 4 is a diagram showing the entry of preheated *in situ* natural gas into a direct reduction furnace.

The present invention provides a method and apparatus which controls the temperature uniformity of the center portion of the iron burden in a direct reduction shaft furnace thereby allowing a higher amount of hydrocarbons to be used throughout the reduction process. The invention is an efficient improvement of existing methods, particularly, the Midrex process and apparatus for direct reduction of iron. The Midrex process and apparatus for direct reduction is disclosed in U.S. Pat. No. 3,748,120 entitled "Method of Reducing Iron Oxide to Metallic Iron," U.S. Pat. No. 3,749,386 entitled "Method for reducing Iron Oxides in a Gaseous Reduction Process," U.S. Pat. No. 3,764,123 entitled "Apparatus for reducing Iron Oxide to Metallic Iron," U.S. Pat. No. 3,816,101 entitled "Method for Reducing Iron Oxides in a Gaseous Reduction process," and U.S. Pat. No. 4,046,557 entitled "Method for producing Metallic Iron Particles," all of which are incorporated by reference herein.

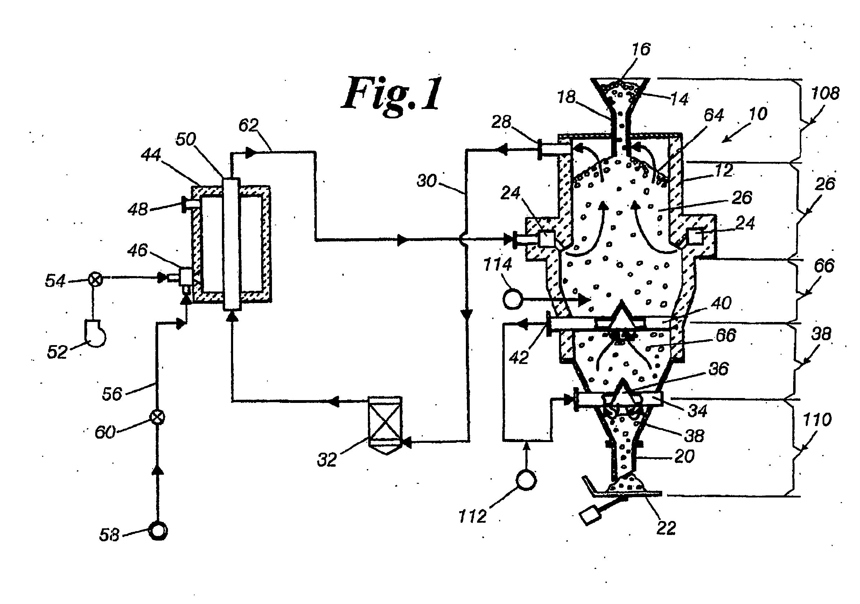

Referring to the drawings, and particularly FIG. 1, there is shown a schematic diagram of an example of a typical process and apparatus for the Midrex process direct reduction of metal oxides such as iron ore to which the present invention is applicable in cool discharge plants. It is to be understood that the present invention is applicable to both hot and cool DR plants, however, for the ease of visualization, a cool discharge plant is shown. The system 10 of FIG. 1 is a typical commercially available system used in many Direct Reduction Iron (DRI) plants. The system 10 includes a shaft furnace 12 having a refractory lining and generally having a feed hopper 14 from which iron ore 16 is fed to the furnace for reduction into iron using reformed gases. The furnace 12 typically has a charging zone 108, a reduction zone 26, a transition zone 66, a cooling zone 38, and a discharge zone 110. The iron ore 16 descends by gravity into the shaft furnace 12 from the hopper 14 through a pellet feed pipe 18. The pellet feed pipe 18 also serves as a gas seal pipe. At the bottom of the furnace 12 is a pellet discharge pipe 20 which also serves as a gas seal pipe. A pellet discharge device 22 of any conventional type is located below the discharge pipe 20 and receives metallic iron, thereby establishing gravitational descent of the burden through the furnace 12.

Near the upper portion of the furnace 12 is a bustle and tuyere system, indicated generally at 24, through which hot reducing gas is introduced to flow upwardly through a reduction zone 26 in counterflow relationship to the downwardly moving iron ore 16, as shown by the arrows, and after reacting with the burden exits from the furnace 12 through a gas off-take pipe 28 located at the top of the furnace 12. The hot reducing gas, flowing from the bustle system 24 to the off-take pipe 28, serves to heat the iron oxide16 and to reduce it to metallized iron. Throughout this Specification and appended claims, the term "metallized iron" is intended to include metal such as sponge iron, pellets, lumps, briquettes, DRI or other compacted forms of reduced metal and the like which contain at least 80% of their metal in the metallic state with the balance substantially in the form of metallic oxides. Metallized in this sense does not mean coated with metal, but nearly completely reduced to the metallic state.

The spent gas from off-take pipe 28 flows through a pipe 30 to a scrubber 32 which cools the spent gas and removes dust. Scrubber 32 can be of any conventional type used in the industry. After leaving the scrubber 32, the spent gas is ducted to a reformer 44. Thereafter it is recycled. In addition, cooled gas is introduced and re-circulated to a lower region of the furnace 12 via a cooling inlet pipe 34 which connects to a cooling gas introduction and distributing member 36 located within the furnace 12 and arranged to distribute the cool gas into the burden 16. Hydrocarbon gas is added to the cool gas from a fuel source 112 prior to a reintroduction into the burden 16. The cool gas introduced into the burden through distributing member 36 flows upward through a cooling zone 38 in counterflow relationship with downwardly moving burden 16 and disengages from the burden 16 at a cooling region off-take member 40 which connects to a cooling region off take pipe 42. The spent gas from the off-take pipe 42 is re-circulated and recycled.

The reformer 44 which generates hot reducing gas has fuel fired burners 46, a flue pipe 48 and a plurality of catalytic reformer tubes 50, only one being shown. Combustion air from a blower 52 is fed to the burners 46 through a flow regulating valve 54. Fuel is fed to the burners 46 through a pipe 56 from a fuel source 58 and flow regulating valves 60. The reformer 44 is connected to the bustle system 24 by a pipe 62.

The simplest explanation of the shaft furnace-based direct reduction plant of the Midrex method in operation starts with the entry of the hot reducing gas through the bustle system 24 at the periphery of the reduction zone 26. The iron oxide burden 16 descends through the reduction zone 26 while the reducing gas ascends from the bottom of the reducing zone 26 through the iron oxide burden 16, reducing the burden 16 in the process, and exiting the shaft furnace 12 through an off-take 28 above stockline 64 of the burden 16. The reducing gases can be externally generated or result from reactions within the shaft furnace 12.

The metallized iron 16 then descends through the furnace transition zone 66 to the cooling zone 38 and to the discharge zone 110, which may result in either a hot or cold product, depending on the equipment installed. Additionally, the iron bearing material16 can be further reacted with hydrocarbon gases in either the transition zone 66 or the cooling zone 38 to increase the carbon content of the product being discharged. This has proven to be a significant issue in steel production today. Higher carbon content in the metallized product, DRI, offers the steelmaker significant savings by substituting oxidation of carbon for electric energy in melting. The hydrocarbon gases can be and typically are added at various locations in the transition zone 66 or cooling zone 38 from fuel sources 114 and 112 respectively.

As a result of the addition of these hydrocarbon gases there is an ascending gas flow, equal to or greater than the quantity of hydrocarbon gases added, which flow up through the center of the furnace 12 all the way to the stockline 64 if no other steps are taken. This also holds true for lower seal leg gases, but they are usually very small in relative volume. The stream of reacted hydrocarbons is colder and of different quality than the reducing gases entering at the bustle 24 and results in lower burden temperatures in the central area of the furnace 12. Since temperature and quality directly affect the kinetics of reduction, the degree of metallization reached by the burden 16 descending in the central furnace area is different than that of the remainder of the furnace 12. Limiting this variation in furnace metallization is very important to the optimization of the plant. The reaction of the hydrocarbon gases is very beneficial and efficient energy wise, but the loss of metallization in the central furnace burden can be significant if it is ignored.

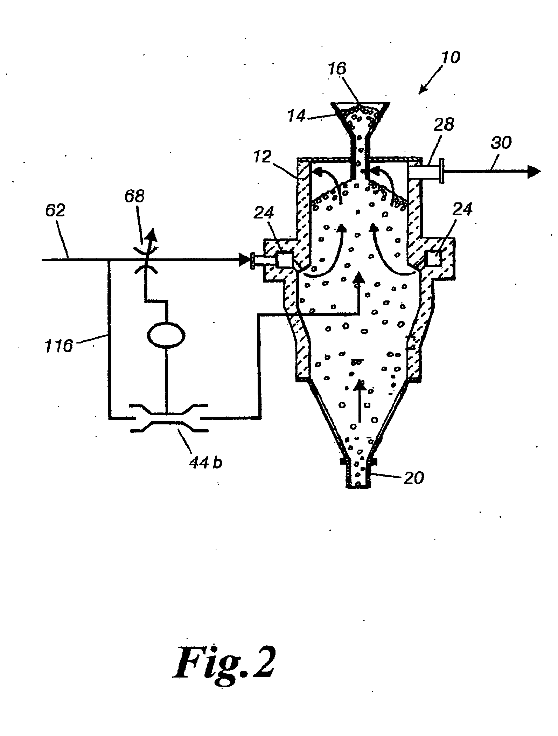

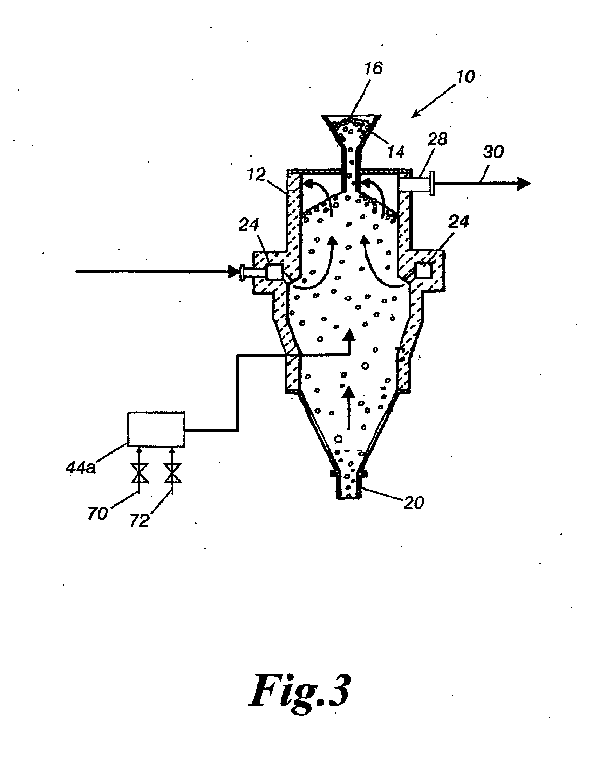

Generally, normal bustle gas temperature ranges from 700-1100°C. Center bed temperature, in both hot and cold discharge plants, ranges from about 600 to about 800°C. Providing a small flow of high temperature reducing gas to the center of the furnace 12 raises the center bed temperature. In typical operation of a direct reduction furnace, the bustle gas stream enters from the periphery of the furnace 12. Referring now to Figures 2 and 3, a preferred embodiment of the present invention is shown. The invented apparatus and method provides a means of injection of hot reducing gases into the center of a direct reduction furnace 12 so that temperature within the center of the burden 16 is maintained within a preferred range. In accordance with this invention, the hot reducing gas is ducted to the vertical centerline of the furnace 12 where it is allowed to mix with the upflowing stream of hydrocarbon cooling gases from the transition zone 66 of the furnace 12. The invented apparatus and method is applicable to shaft furnaces discharging either hot or cold metallized product. The source of the hot reducing gas may be from either a reformer 44 or a partial oxidation reactor 44(a) such as the OXY+ system as disclosed in U.S. Pat. No. 5,997,596 entitled "Oxygen Fuel Boost Reformer Process and Apparatus".

In accordance with Figure 2, prior to entering the furnace 12, a portion of the high temperature bustle gas stream is split-off and injected into the center of the furnace 12. A variable or fixed restriction device 68 is used to provide adequate pressure drop to force the bustle gas to flow through the center injection line 116. The flow rate of hot bustle gas through the center injection line 116 is preferably measured using a venturi 44(b), however, other suitable measuring means may be used.

In accordance with Figure 3, a partial oxidation reactor 44(a) or multiple reactors generate the hot reducing gas which is then ducted to the center of the furnace 12, eliminating the need to divert a small portion of hot bustle gas to the center of the furnace 12. In general, the partial oxygen reactor 44(a) bums oxygen 70 and a hydrocarbon fuel 72 such as natural gas to produce a high quality, high temperature reducing gas. This gas is well suited to use for center injection into a direct reduction furnace 12. Since the quantity and ratio of oxygen and hydrocarbon fuel are tightly controlled for proper combustion in the oxidation reactor 44(a), the mechanism to vary the flow rate of center injection gas may easily be built into the partial oxidation reactor 44(a) design.

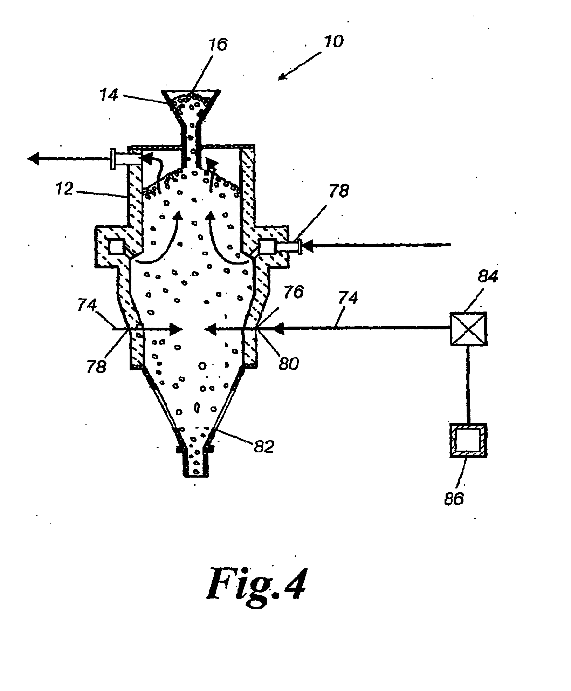

In an alternative embodiment of the invention in accordance with FIG. 4, preheated natural gas 74 is added to a plurality of nozzles 76, 78, 80, respectively, which are located around the periphery of the transition zone 66 or the discharge zone 110 and which are not used for cooling so as to increase the amount of hydrocarbons used within the lower cone 82 of the furnace 12 while maintaining an adequate center furnace temperature. This entails preheating a hydrocarbon stream and adding the preheated hydrocarbon stream to any of the plurality of nozzles 76, 78, 80 which are not used for cooling of the direct reduced iron. When preheated natural gas 74 is injected into non-cooling inlets 76, 78, 80 of the furnace 12, additional energy is shifted to the furnace 12 and uniformity of burden 16 temperatures is improved.

The apparatus includes a heat exchanger 84 to preheat the natural gas 74 before injecting it into the direct reduction furnace 12. Hot flue gas from a combustion process is supplied to the heat exchanger 84 to preheat the natural gas 74 stream. The flue gas may be from a reformer 86 or from any other source of combustion flue gases. The temperature to which the natural gas 74 is preheated is typically up to 450°C, although the temperature is only limited at the upper end by cracking of the heated gas. That is, the preheat temperature must be lower than the temperature at which cracking of the natural gas 74 would present problems with carbon deposition in the heat exchanger 84 or piping. It will be appreciated by those of skilled in the art that the preheat temperature can be as high as 550°C depending upon the composition of the preheated gas and its tendency to crack.

Alternatively, the natural gas 74 is mixed with H₂, H₂O, CO₂, or any other gas that contains H₂, H₂O and/or CO₂, before the preheating stage. Addition of any of these gases will decrease the partial pressure of the hydrocarbons and thus, their tendency to crack during or after preheating. The addition of H₂ directly decreases the tendency of hydrocarbons to crack. H₂O and/or CO₂ directly decreases the tendency of any H₂ and CO to form carbon. With the addition of these gases the preheat temperature limit may be raised to 700°C.

The invented method and apparatus allows more natural gas 74 to be injected into the furnace 12 before the furnace temperatures cool to the point where any further production benefit from additional reducing gases will be negated by the decrease in reaction kinetics. Adding more natural gas 74, because it is hot, increases-*sit*u reforming, and cracking, thereby increasing the amount of reducing gas in the direct reduction furnace 12, which results in a higher production rate from the direct reduction furnace 12.

because the hydrocarbons added to the lower portion of the furnace 12 cools the reduced iron product, the quantity and composition of added gases will still be limited by the minimum allowable temperature of the output product, which is around 650-700 °C for a furnace producing hot briquetted iron (HBI).

It will be appreciated by those of ordinary skill in the art that any one of these embodiments may be employed, either individually or jointly, to accomplish the goals stated herein.

From the foregoing, it is readily apparent that we have invented an improved method and apparatus for controlling the temperature of the center burden of a direct reduction furnace; that allows the use of higher quantities of hydrocarbons or other gases within the lower portion of both hot and cold discharge furnaces so that product carbon and / or *in-situ* reforming is increased; which conserves energy in a Direct Reduction furnace by maintaining a uniform temperature therein; which provides control options to DRI plant operators to allow significantly higher levels of hydrocarbon gas additions, while reducing the temperature variations across the burden; that offsets the cooling effect caused by rising upflowing gas into the reduction zone of the furnace, thereby increasing metallization of the burden.

It is to be understood that the foregoing description and specific embodiments are merely illustrative of the best mode of the invention and the principles thereof, and that various modifications and additions may be made to the apparatus by those skilled in the art, without departing from the spirit and scope of this invention, which is therefore understood to be limited only by the scope of the appended claims.

## Claims

1. Apparatus for controlling temperature uniformity of the burden in a furnace for direct reduction of iron oxides to a metallized iron product, comprising:
a generally vertical shaft furnace (12) having an upper charging end (108), a bottom discharge end (110), and a vertical centerline;
means (14) for charging particulate iron oxide material to the upper end of the furnace (12) to form the burden therein, and means (22) for removing metallized iron product from the bottom end (110) of the furnace (12), whereby a continuous gravitational flow of the burden can be established through the furnace;
a reacted gas outlet (30) at the upper end (108) of the furnace (12);
a first hot reducing gas inlet means (24) through which a hydrocarbon gas is injected into the burden, the first hot reducing gas inlet (24) located between the upper end of furnace (12) and the bottom of the furnace (12), wherein the hydrocarbon gas is injected into the burden to reduce the burden to metallized iron, **characterized by**
a second hot reducing gas inlet means terminating at or in close proximity to the vertical centerline and through which a second hydrocarbon gas is injected into the furnace at or in close proximity to the vertical centerline to offset a cooling effect of upflowing gases, the second reducing gas inlet being intermediate to the first reducing gas inlet (24) and the bottom of the furnace (12), wherein
the second hot reducing gas inlet means comprises an associated gas reformer (44) for providing the hydrocarbon gas and means (116) for splitting-off the second hydrocarbon gas from the hydrocarbon gas and conducting the second hydrocarbon gas to the furnace (12) and injection of the second hydrocarbon gas into the furnace (12), wherein a variable or fixed restriction device (68) is arranged to provide an adequate pressure drop to force the second hydrocarbon gas to flow through the means (116) for conducting the second hydrocarbon gas, or
the second hot reducing gas inlet means comprises a partial oxidation reactor (44a) for providing the second hydrocarbon gas and means for conducting the second hydrocarbon gas to the furnace (12) and injection of the second hydrocarbon gas into the furnace (12), or
a natural gas preheating means (84) communicably linked to a plurality of nozzles (76, 78, 80) located around the periphery of the transition zone (66) or the discharge zone (110) through which preheated natural gas is injected below the first hot reducing gas inlet means (24) centrally of the furnace (12) for offsetting a cooling effect in the burden caused by upflowing gases.

2. Apparatus according to claim 1 wherein the first hot reducing gas inlet means (24) is a bustle and tuyere system.

3. Apparatus according to claim 1, wherein the natural gas preheating means (84) comprises a heat exchanger exterior to the furnace (12).

4. Apparatus according to claim 1 or 3, further comprising means for mixing H₂, H₂O, or CO₂ with the natural gas prior to the natural gas preheating means.

5. Apparatus according to claim 1, comprising:
a gas removal system (94) for collecting and removing an upflow gas, the gas removal system (94) being disposed between the reducing gas inlet system (24) and the bottom end of the furnace;
at least one scrubber (98, 100) communicating with the removal system for scrubbing removed upflow gas;
a plurality of pipes (90, 92) connected to the reducing gas inlet system for reintroduction of scrubbed upflow gas into the furnace (12); and
a reacted gas outlet (28) at the upper end (108) of the furnace (12) communicating with the gas removal system.

6. Apparatus according to claim 5, further comprising a top gas scrubber (88) disposed between the at least one scrubber (98, 100) and the reducing gas inlet system for further scrubbing of the upflow gas prior to reintroducing into the furnace (12).

7. Apparatus according to claim 6, wherein the gas removal system comprises at least one pipe (90, 92) disposed within the furnace (12) having a plurality of slots (94) therein for collecting upflowing gas and routing the upflowing gas from the furnace (12) to the at least one scrubber (98, 100).

8. A method for controlling temperature uniformity of a burden in a furnace for the direct reduction of iron oxides comprising the steps of:
charging particulate iron oxide material to a generally vertical shaft furnace (12), having a first end (108), a second end (110), and a bottom (22) to form a burden therein;
injecting a hydrocarbon gas into the burden from a first hot reducing gas injection means (24) located intermediate the ends of the furnace (12), wherein the injected reducing gas reduces the charged particulate iron oxide material to metallized iron, and
removing metallized iron product from the bottom of the furnace (12) thereby establishing a continuous gravitational flow of the burden through the furnace (12),
**characterized by**
injecting a second hydrocarbon gas from a second hot reducing gas injection means located at or in close proximity to a vertical centerline of the furnace (12) into the center of the burden to offset a cooling effect of upflowing gases; ;, wherein
the second hydrocarbon gas is formed in a gas reformer (44) exterior to the furnace (12) for providing the hydrocarbon gas, wherein the second hydrocarbon gas is split-off from the hydrocarbon gas prior to injection of the second hydrocarbon gas into the furnace (12), wherein an adequate pressure drop to force the second hydrocarbon gas to flow through a center injection line (116) is provided by a variable or fixed restriction device (68),
the second hydrocarbon gas is formed in a partial oxidation reactor (44a) prior to injection of the second hydrocarbon gas into the furnace (12), or
preheated natural gas is injected below the first hot reducing gas injection means (24) centrally of the furnace to offset a cooling effect of upflowing gases.

9. A method according to claim 8 wherein preheating of the natural gas is carried out by a heat exchanger (84) prior to injection of preheated natural gas into the furnace (12).

10. A method according to claim 8 or 9 wherein the natural gas is mixed with H₂, H₂O, or CO₂ prior to the preheating step.

11. A method for the direct reduction of iron oxides according to claim 8 comprising the steps of:
removing upflowing gas from the burden by a gas removing means located below the reducing gas inlet system (24);
scrubbing the removed upflowing gas to create a scrubbed gas;
circulating the scrubbed gas through a plurality of pipes (90, 92) to the reducing gas inlet system;
introducing the scrubbed gas as recycled reducing gas into the furnace (12) through the reducing gas inlet system (24)the.

12. The method according to claim 11, wherein the circulating step further includes the step of circulating the removed upflow gas to a top gas scrubber (88) for further scrubbing prior to the circulation of the scrubbed gas to the reducing gas inlet system (24).

## Patentansprüche

1. Vorrichtung zur Steuerung der Gleichmäßigkeit der Temperatur der Beladung in einem Ofen zur direkten Reduktion von Eisenoxiden zu einem metallisierten Eisenprodukt, die Folgendes umfasst:
einen im Wesentlichen vertikalen Schachtofen (12) mit einem oberen Beschickungsende (108), einem unteren Entladungsende (110) und einer vertikalen Mittellinie;
Mittel (14) zur Beschickung des oberen Endes des Ofens (12) mit partikulärem Eisenoxidmaterial, um die Beladung darin zu bilden, und Mittel (22) zur Entfernung der metallisierten Eisenprodukte vom unteren Ende (110) des Ofens (12), wodurch ein kontinuierlicher Gravitationsfluss der Beladung durch den Ofen hergestellt werden kann;
einen Auslass (30) für umgesetztes Gas am oberen Ende (108) des Ofens (12);
ein erstes Mittel (24) zum Einlass von heißem Reduktionsgas, durch welches ein Kohlenwasserstoffgas in die Beladung eingespritzt wird, wobei sich der erste Einlass (24) für heißes Reaktionsgas zwischen dem oberen Ende des Ofens (12) und dem Boden des Ofens (12) befindet, wobei das Kohlenwasserstoffgas in die Beladung gespritzt wird, um die Beladung zu metallisiertem Eisen zu reduzieren, **gekennzeichnet durch**:
ein zweites Mittel zum Einlass von heißem Reduktionsgas, das an oder in der Nähe der vertikalen Mittellinie endet und **durch** welches ein zweites Kohlenwasserstoffgas an oder in der Nähe der vertikalen Mittellinie in den Ofen eingespritzt wird, um einer Kühlwirkung der aufwärts strömenden Gase entgegenzuwirken, wobei der zweite Einlass für Reduktionsgas zwischen dem ersten Einlass (24) für Reduktionsgas und dem Boden des Ofens (12) liegt, wobei
das zweite Mittel zum Einlass von heißem Reduktionsgas einen angeschlossenen Gasreformer (44) zur Bereitstellung des Kohlenwasserstoffgases und Mittel (116) zur Abspaltung des zweiten Kohlenwasserstoffgases vom Kohlenwasserstoffgas und zur Führung des zweiten Kohlenwasserstoffgases in den Ofen (12) und zur Einspritzung des zweiten Kohlenwasserstoffgases in den Ofen (12) umfasst, wobei eine variable oder fixe Drosselvorrichtung (68) angeordnet ist, um einen geeigneten Druckabfall zu erzeugen, um das zweite Kohlenwasserstoffgas zu zwingen, **durch** das Mittel (116) zur Führung des zweiten Kohlenwasserstoffgases zu strömen, oder
das zweite Mittel zum Einlass von heißem Reduktionsgas einen Teiloxidationsreaktor (44a) zur Bereitstellung des zweiten Kohlenwasserstoffgases und Mittel zur Führung des zweiten Kohlenwasserstoffgases zum Ofen (12) und zur Einspritzung des zweiten Kohlenwasserstoffgases in den Ofen (12) umfasst, oder
ein Mittel (84) zum Vorheizen von Erdgas, das kommunizierend mit einer Vielzahl von Düsen (76, 78, 80) verbunden ist, die sich rund um den Umfang der Übergangszone (66) oder der Entladungszone (110) befinden, **durch** welche vorgeheiztes Erdgas unter dem ersten Mittel (24) zum Einlass von heißem Reduktionsgas in der Mitte des Ofens (12) eingespritzt wird, um einer **durch** aufwärts strömende Gase ausgelösten Kühlwirkung auf die Beladung entgegenzuwirken.

2. Vorrichtung gemäß Anspruch 1, wobei das erste Mittel (24) zum Einlass von heißem Reduktionsgas ein Wind-Ringleitungs- und Winddüsen-System ist.

3. Vorrichtung gemäß Anspruch 1, wobei das Mittel (84) zum Vorheizen von Erdgas einen Wärmetauscher außerhalb des Ofens (12) umfasst.

4. Vorrichtung gemäß Anspruch 1 oder 3, die des Weiteren Mittel zur Beimischung von H₂, H₂O oder CO₂ zum Erdgas vor dem Mittel zum Vorheizen von Erdgas umfasst.

5. Vorrichtung gemäß Anspruch 1, die Folgendes umfasst:
ein Gasentfernungssystem (94) zur Sammlung und Entfernung von aufwärts strömendem Gas, wobei sich das Gasentfernungssystem (94) zwischen dem Einlasssystem (24) für Reduktionsgas und dem unteren Ende des Ofens befindet;
mindestens einen Nassreiniger (98, 100), der mit dem Entfernungssystem kommuniziert, um das entfernte, aufwärts strömende Gas nass zu reinigen;
eine Vielzahl von Rohren (90, 92), die mit dem Einlasssystem für Reduktionsgas verbunden sind, um das nass gereinigte, aufwärts strömende Gas in den Ofen (12) zurückzuführen; und
einen Auslass (28) für umgesetztes Gas am oberen Ende (108) des Ofens (12), der mit dem Gasentfernungssystem kommuniziert.

6. Vorrichtung gemäß Anspruch 5, die des Weiteren einen Kopfgas-Nassreiniger (88) umfasst, der sich zwischen dem mindestens einen Nassreiniger (98, 100) und dem Einlasssystem für Reduktionsgas befindet, um das aufwärts strömende Gas vor der Rückführung in den Ofen (12) weiter nass zu reinigen.

7. Vorrichtung gemäß Anspruch 6, wobei das Gasentfernungssystem mindestens ein Rohr (90, 92) umfasst, das sich innerhalb des Ofens (12) befindet und eine Vielzahl von Schlitzen (94) darin aufweist, um aufwärts strömendes Gas zu sammeln und das aufwärts strömende Gas vom Ofen (12) zu dem mindestens einen Nassreiniger (98, 100) zu leiten.

8. Verfahren zur Steuerung der Gleichmäßigkeit der Temperatur einer Beladung in einem Ofen zur direkten Reduktion von Eisenoxiden, das folgende Schritte umfasst:
Beschickung eines im Allgemeinen vertikalen Schachtofens (12) mit einem ersten Ende (108), einem zweiten Ende (110) und einem Boden (22) mit partikulärem Eisenoxidmaterial, um darin eine Beladung zu bilden;
Einspritzung eines Kohlenwasserstoffgases in die Beladung von einem ersten Mittel (24) zur Einspritzung von heißem Reduktionsgas, das sich zwischen den Enden des Ofens (12) befindet, wobei das eingespritzte Reduktionsgas das geladene partikuläre Eisenoxidmaterial zu metallisiertem Eisen reduziert, und
Entfernung des metallisierten Eisenproduktes vom Boden des Ofens (12), wodurch ein ständiger Gravitationsfluss der Beladung durch den Ofen (12) hergestellt wird,
**gekennzeichnet durch**
Einspritzen eines zweiten Kohlenwasserstoffgases von einem zweiten Mittel zur Einspritzung von heißem Reduktionsgas, das sich an oder in der Nähe einer vertikalen Mittellinie des Ofens (12) befindet, in die Mitte der Beladung, um einer Kühlwirkung der aufwärts strömenden Gase entgegenzuwirken, wobei
das zweite Kohlenwasserstoffgas in einem Gasreformer (44) außerhalb des Ofens (12) zur Bereitstellung des Kohlenwasserstoffgases gebildet wird, wobei das zweite Kohlenwasserstoffgas von dem Kohlenwasserstoffgas vor dem Einspritzen des zweiten Kohlenwasserstoffgases in den Ofen (12) abgespalten wird, wobei **durch** eine variable oder fixe Drosselvorrichtung (68) ein geeigneter Druckabfall erzeugt wird, um das zweite Kohlenwasserstoffgas zu zwingen, **durch** eine Injektionsmittellinie (116) zu strömen,
das zweite Kohlenwasserstoffgas in einem
Teiloxidationsreaktor (44a) vor dem Einspritzen des zweiten Kohlenwasserstoffgases in den Ofen (12) gebildet wird, oder
vorgeheiztes Erdgas unterhalb des ersten Mittels (24) zur Einspritzung von heißem Reduktionsgas in der Mitte des Ofens eingespritzt wird, um einer Kühlwirkung aufwärts strömender Gase entgegenzuwirken.

9. Verfahren gemäß Anspruch 8, wobei das Vorheizen des Erdgases vor dem Einspritzen von vorgeheiztem Erdgas in den Ofen (12) durch einen Wärmetauscher (84) erfolgt.

10. Verfahren gemäß Anspruch 8 oder 9, wobei dem Erdgas vor dem Vorheizschritt H₂, H₂O oder CO₂ beigemischt wird.

11. Verfahren zur direkten Reduktion von Eisenoxiden gemäß Anspruch 8, das die folgenden Schritte umfasst:
Entfernung von aufwärts strömendem Gas aus der Beladung durch ein Gasentfernungsmittel, das sich unterhalb des Einlasssystems (24) für Reduktionsgas befindet;
Nassreinigen des entfernten, aufwärts strömenden Gases zur Bildung von nass gereinigtem Gas;
Zirkulieren des nass gereinigten Gases durch eine Vielzahl von Rohren (90, 92) zum Einlasssystem für Reduktionsgas;
Einführung des nass gereinigten Gases in den Ofen (12) als rezykliertes Reduktionsgas durch das Einlasssystem (24) für Reduktionsgas.

12. Verfahren gemäß Anspruch 11, wobei der Zirkulierungsschritt des Weiteren den Schritt des Zirkulierens des entfernten, aufwärts strömenden Gases zu einem Kopfgas-Nassreiniger (88) zum weiteren Nassreinigen vor der Zirkulation des nass gereinigten Gases zum Einlasssystem (24) des Reduktionsgases beinhaltet.

## Revendications

1. Appareil pour commander l'uniformité de température du lit de fusion dans un four pour la réduction directe d'oxydes de fer en un produit ferreux métallisé, comprenant :
un four à cuve généralement vertical (12) possédant une extrémité de chargement supérieure (108), une extrémité d'évacuation inférieure (110), et une ligne centrale verticale ;
un moyen (14) pour charger un matériau oxyde de fer particulaire dans l'extrémité supérieure du four (12) pour y former le lit de fusion, et un moyen (22) pour éliminer un produit ferreux métallisé à partir de l'extrémité inférieure (110) du four (12), moyennant quoi un écoulement gravitationnel continu du lit de fusion peut être établi à travers le four ;
une sortie de gaz ayant subi une réaction (30) à l'extrémité supérieure (108) du four (12) ;
un premier moyen d'entrée de gaz réducteur chaud (24) à travers lequel un hydrocarbure gazeux est injecté dans le lit de fusion, la première entrée de gaz réducteur chaud (24) étant positionnée entre l'extrémité supérieure du four (12) et le fond du four (12), dans lequel l'hydrocarbure gazeux est injecté dans le lit de fusion pour réduire le lit de fusion en fer métallisé, **caractérisé par**
un second moyen d'entrée de gaz réducteur chaud se terminant au niveau ou à proximité de la ligne centrale verticale et à travers lequel un second hydrocarbure gazeux est injecté dans le four au niveau ou à proximité de la ligne centrale verticale pour compenser un effet de refroidissement de gaz d'écoulement ascendant, la seconde entrée de gaz réducteur chaud étant entre la première entrée de gaz réducteur chaud (24) et le fond du four (12), dans lequel
le second moyen d'entrée de gaz réducteur chaud comprend un reformeur de gaz associé (44) pour fournir l'hydrocarbure gazeux et un moyen (116) pour dissocier le second hydrocarbure gazeux de l'hydrocarbure gazeux et conduire le second hydrocarbure gazeux jusqu'au four (12) et pour l'injection du second hydrocarbure gazeux dans le four (12), dans lequel un dispositif de restriction variable ou fixe (68) est agencé pour fournir une chute de pression adéquate pour forcer le second
hydrocarbure gazeux à s'écouler à travers le moyen (116) pour conduire le second hydrocarbure gazeux, ou
le second moyen d'entrée de gaz réducteur chaud comprend un réacteur à oxydation partielle (44a) pour fournir le second hydrocarbure gazeux et un moyen pour conduire le second hydrocarbure gazeux jusqu'au four (12) et pour l'injection du second hydrocarbure gazeux dans le four (12), ou
un moyen de préchauffage de gaz naturel (84) raccordé en communication avec une pluralité de buses (76, 78, 80) positionnées autour de la périphérie de la zone de transition (66) ou la zone d'évacuation (110) à travers lequel un gaz naturel préchauffé est injecté en dessous du premier moyen d'entrée de gaz réducteur chaud (24) de façon centrale au four (12) pour compenser un effet de refroidissement dans le lit de fusion entraîné par des gaz d'écoulement ascendant.

2. Appareil selon la revendication 1 dans lequel le premier moyen d'entrée de gaz réducteur chaud (24) est un système de conduite circulaire et de tuyère.

3. Appareil selon la revendication 1, dans lequel le moyen de préchauffage à gaz naturel (84) comprend un échangeur de chaleur extérieur au four (12).

4. Appareil selon la revendication 1 ou 3, comprenant en outre un moyen pour mélanger du H₂, H₂O, ou CO₂ avec le gaz naturel avant le moyen de préchauffage à gaz naturel.

5. Appareil selon la revendication 1, comprenant :
un système de dégazage (94) pour collecter et éliminer un gaz d'écoulement ascendant, le système de dégazage (94) étant disposé entre le système d'entrée de gaz réducteur (24) et l'extrémité inférieure du four ;
au moins un laveur (98, 100) communiquant avec le système de dégazage pour laver un gaz d'écoulement ascendant dégazé ;
une pluralité de tuyaux (90, 92) raccordés au système d'entrée de gaz réducteur pour la réintroduction de gaz d'écoulement ascendant lavé dans le four (12) ; et
une sortie de gaz ayant subi une réaction (28) à l'extrémité supérieure (108) du four (12) communiquant avec le système de dégazage.

6. Appareil selon la revendication 5, comprenant en outre un laveur de gaz supérieur (88) disposé entre l'au moins un laveur (98, 100) et le système d'entrée de gaz réducteur pour le lavage supplémentaire du gaz d'écoulement ascendant avant la réintroduction dans le four (12).

7. Appareil selon la revendication 6, dans lequel le système de dégazage comprend au moins un tuyau (90, 92) disposé à l'intérieur du four (12) possédant une pluralité de fentes (94) dans celui-ci pour collecter le gaz d'écoulement ascendant et acheminer le gaz d'écoulement ascendant du four (12) à l'au moins un laveur (98, 100).

8. Procédé pour commander l'uniformité de température d'un lit de fusion dans un four pour la réduction directe d'oxydes de fer, comprenant les étapes suivantes :
le chargement de matériau oxyde de fer particulaire dans un four à cuve généralement vertical (12), possédant une première extrémité (108), une seconde extrémité (110), un fond (22) pour y former un lit de fusion ;
l'injection d'un hydrocarbure gazeux dans le lit de fusion à partir d'un premier moyen d'injection de gaz réducteur (24) positionné entre les extrémités du four (12),
dans lequel le gaz réducteur injecté réduit le matériau oxyde de fer particulaire chargé en fer métallisé, et
l'élimination de produit ferreux métallisé à partir du fond du four (12), établissant ainsi un écoulement gravitationnel continu du lit de fusion à travers le four (12),
**caractérisé par**
l'injection d'un second hydrocarbure gazeux à partir d'un second moyen d'injection de gaz réducteur positionné au niveau ou à proximité d'une ligne centrale verticale du four (12) au centre du lit de fusion pour compenser un effet de refroidissement de gaz d'écoulement ascendant ; dans lequel
le second hydrocarbure gazeux est formé dans un reformeur de gaz (44) extérieur au four (12) pour fournir l'hydrocarbure gazeux, dans lequel le second hydrocarbure gazeux est dissocié de l'hydrocarbure gazeux avant l'injection du second hydrocarbure gazeux dans le four (12), dans lequel une chute de pression adéquate pour forcer le second hydrocarbure gazeux à s'écouler à travers une conduite d'injection centrale (116) est fournie par un dispositif de restriction variable ou fixe (68),
le second hydrocarbure gazeux est formé dans un réacteur à oxydation partielle (44a) avant l'injection du second hydrocarbure gazeux dans le four (12), ou
du gaz naturel préchauffé est injecté en dessous du premier moyen d'injection de gaz réducteur (24) de façon centrale au four pour compenser un effet de refroidissement de gaz d'écoulement ascendant.

9. Procédé selon la revendication 8, dans lequel le préchauffage du gaz naturel est réalisé par un échangeur de chaleur (84) avant l'injection de gaz naturel préchauffé dans le four (12).

10. Procédé selon la revendication 8 ou 9, dans lequel le gaz naturel est mélangé avec du H₂, H₂O, ou CO₂ avant l'étape de préchauffage.

11. Procédé pour la réduction directe d'oxydes de fer selon la revendication 8, comprenant les étapes suivantes :
le dégazage de gaz d'écoulement ascendant à partir du lit de fusion par un moyen de dégazage positionné en dessous du système d'entrée de gaz réducteur (24) ;
le lavage du gaz d'écoulement ascendant dégazé pour créer un gaz lavé ;
la circulation du gaz lavé à travers une pluralité de tuyaux (90, 92) jusqu'au système d'entrée de gaz réducteur ;
l'introduction du gaz lavé sous forme de gaz réducteur recyclé dans le four (12) à travers le système d'entrée de gaz réducteur (24).

12. Procédé selon la revendication 11, dans lequel l'étape de circulation comprend en outre l'étape de circulation du gaz d'écoulement ascendant dégazé jusqu'à un laveur de gaz supérieur (88) pour un lavage supplémentaire avant la circulation du gaz lavé jusqu'au système d'entrée de gaz réducteur (24).
